# EUROPEAN PATENT APPLICATION

(11) **EP 3 381 750 A1**
(43) Date of publication of application: **03.10.2018**
(21) Application number: 17191436.9
(22) Date of filing: 15.09.2017
(51) Int. Cl.: B60R 13/02, B60J 7/22

(54) **SUNROOF APPARATUS FOR VEHICLE**

(30) Priority: 30.03.2017 JP 2017066791
(71) Applicant: AISIN SEIKI KABUSHIKI KAISHA, Kariya-shi, Aichi-ken, 448-8650 (JP)
(72) Inventor: YANAGITANI, Ryuto, KARIYA-SHI, AICHI-KEN, 448-8650 (JP); MATSUSHITA, Jun, KARIYA-SHI, AICHI-KEN, 448-8650 (JP); KONDO, Yuichi, KARIYA-SHI, AICHI-KEN, 448-8650 (JP); INOUE, Katsura, KARIYA-SHI, AICHI-KEN, 448-8650 (JP)
(74) Representative: Intès, Didier Gérard André

(57) **Abstract**

A sunroof apparatus (10) for a vehicle includes: a base panel (12) that serves as a frame of an upper portion of a vehicle (1) and supports a roof (3) including an opening portion (2); a bracket (14) that is fixed to the base panel and includes an interior holding portion (42b) to which a vehicle interior component (16) is attached and a cover holding portion (43) which protrudes toward a position inside the opening portion from a position between the base panel and the interior holding portion; and a cover (15) that is attached to the cover holding portion.

## Description

### TECHNICAL FIELD

This disclosure relates to a sunroof apparatus for a vehicle.

### BACKGROUND DISCUSSION

In the related art, there is known a sunroof apparatus for a vehicle in which a movable panel is displaced so that the open or closed state of an opening portion provided at an upper portion of the vehicle is switched.

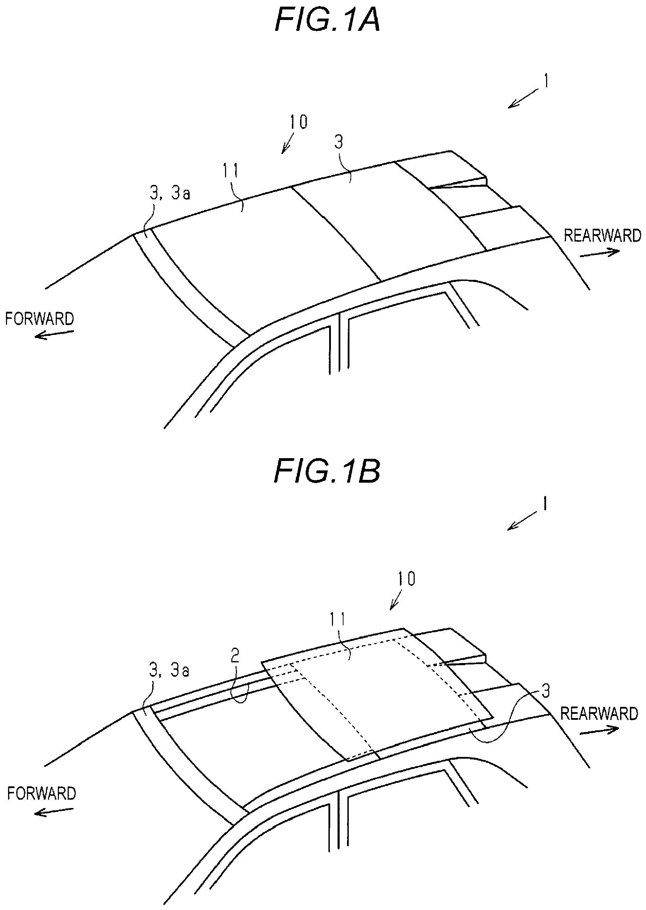

A sunroof apparatus for a vehicle disclosed in JP 2005-126031A (Reference 1) includes driving mechanisms each of which causes a movable panel to tilt or slide and covers each of which is attached to the movable panel while being positioned closer to the inside of the vehicle than the driving mechanism and extends in a vehicle front-rear direction. The driving mechanisms and the covers are disposed on opposite sides in a vehicle width direction of an opening portion and the movable panel (refer to Fig. 1 in Reference 1).

In a case where the sunroof apparatus for a vehicle disclosed in Reference 1 is used, it is difficult to see the driving mechanisms provided on the opposite sides in the vehicle width direction from the inside of the vehicle because of the covers. However, the covers do not completely cover metal portions of guide rails or the like. In addition, while the guide rails provided on the opposite sides in the vehicle width direction are exposed through the opening portion of the vehicle which includes the sunroof apparatus for a vehicle, a metal base panel for supporting a roof panel that is provided on a front side of the opening portion is also exposed at a front edge portion of the opening portion. The base panel is a necessary component since a weather strip, which is for securing liquid-tightness between the base panel and the movable panel, is fixed while being interposed between the base panel and the movable panel when the movable panel is in a fully closed state. A metal portion of the base panel is exposed when seen from the inside of the vehicle. Therefore, there may be deterioration in appearance due to light being reflected by the metal portion or the like when looking up the opening portion in an open state.

Thus, a need exists for a sunroof apparatus for a vehicle with a low possibility of deterioration in appearance.

### SUMMARY

A sunroof apparatus for a vehicle according to an aspect of this disclosure includes a base panel that serves as a frame of an upper portion of a vehicle and supports a roof including an opening portion, a bracket that is fixed to the base panel and includes an interior holding portion to which a vehicle interior component is attached and a cover holding portion which protrudes toward a position inside the opening portion from a position between the base panel and the interior holding portion, and a cover that is attached to the cover holding portion.

According to this configuration, a cover member is attached to be closer to a position inside the opening portion than the bracket and the base panel. Therefore, a portion of the bracket and a portion of the base panel that face the opening portion are covered by the cover. Accordingly, it is difficult to see the base panel that serves as a frame of an upper portion of the vehicle and the bracket for attaching the vehicle interior component when seen from a position inside the opening portion. Therefore, the appearance of the sunroof apparatus for a vehicle is unlikely to be deteriorated.

In the configuration described above, it is preferable that the bracket includes a fixation portion that is fixed to a lower surface of the base panel and a connection portion that extends downwards from the fixation portion, the interior holding portion is provided to extend toward the opening portion from the connection portion, the cover holding portion is provided to extend toward the opening portion from the connection portion at a position above the interior holding portion, and the cover includes a first cover portion that extends upwards from the cover holding portion and a second cover portion that extends downwards from the cover holding portion.

According to this configuration, it is difficult to see the base panel and the fixation portion that constitutes the bracket from a position inside the opening portion because of the first cover portion and it is difficult to see the connection portion that constitutes the bracket from a position inside the opening portion because of the second cover portion. Therefore, the appearance of the sunroof apparatus for a vehicle is more unlikely to be deteriorated.

In the configuration described above, it is preferable that the sunroof apparatus for a vehicle further includes a movable panel that is displaced in a vertical direction so that the opening portion is opened or closed and a weather strip that is interposed between the movable panel and the base panel in the vertical direction so that liquid tightness between the movable panel and the base panel is secured, and the weather strip includes an attachment leg portion that is attached to the base panel such that the attachment leg portion wraps in an opening edge portion of the base panel that faces the opening portion.

According to this configuration, it is difficult to see the opening edge portion of the base panel because of the weather strip. That is, since the weather strip is interposed between the movable panel and the base panel, there is an effect that liquid tightness between the movable panel and the base panel is secured and it is difficult to see the base panel from a position inside the opening portion. Therefore, it is not necessary for the cover to cover the entire portion of the base panel from a position inside the opening portion. In other words, the cover only has to cover the entire portion of the base panel from a position inside the opening portion in cooperation with the weather strip. Therefore, it is easy to set the shape of the cover such that the appearance of the sunroof apparatus is improved.

In the configuration described above, it is preferable that the cover is provided to be positioned closer to a position inside the opening portion than the opening edge portion of the base panel that faces the opening portion.

According to this configuration, it is possible to cover the entire portion of the base panel and the bracket by using the cover. Therefore, it is easy to set the shapes of the base panel and the bracket such that the appearance of the sunroof apparatus is improved.

In the configuration described above, it is preferable that both of the fixation portion and the cover holding portion are plate-shaped, and the cover holding portion is provided on an end portion of the connection portion such that the cover holding portion is positioned between a plurality of fixation portions and the cover holding portion is bent toward a side opposite to the fixation portion side with a boundary portion between the cover holding portion and the connection portion as a base point.

According to this configuration, the bracket can be manufactured through a simple process in which a metal material is processed through, for example, press forming which is a general technology and the metal material is bent. That is, the sunroof apparatus for a vehicle can be easily manufactured.

The appearance of the sunroof apparatus for a vehicle according to the disclosure is unlikely to be deteriorated.

### BRIEF DESCRIPTION OF THE DRAWINGS

The foregoing and additional features and characteristics of this disclosure will become more apparent from the following detailed description considered with the reference to the accompanying drawings, wherein:
Fig. 1A is a perspective view of an upper portion of a vehicle with an opening portion in a closed state and Fig. 1B is a perspective view of the upper portion of the vehicle with the opening portion in an open state;
Fig. 2 is an exploded perspective view of a sunroof apparatus for a vehicle;
Fig. 3 is an end view of the sunroof apparatus for a vehicle that is cut at the position of a welded portion;
Fig. 4 is an enlarged view of Fig. 3;
Fig. 5 is an end view of the sunroof apparatus for a vehicle that is cut at the position of an interposed portion;
Fig. 6A is a perspective view of a bracket and Fig. 6B is a plan view of the bracket; and
Fig. 7 is an end view illustrating another example of the sunroof apparatus for a vehicle.

### DETAILED DESCRIPTION

Hereinafter, an embodiment of a sunroof apparatus for a vehicle will be described with reference to drawings.

As illustrated in Figs. 1A and 1B, a vehicle 1 includes a roof 3 that is provided with an approximately rectangular opening portion 2. In addition, the vehicle 1 includes a sunroof apparatus 10 for a vehicle that includes a movable panel 11 for switching the open or closed state of the opening portion 2.

The sunroof apparatus 10 for a vehicle includes driving units (not shown) that are disposed at opposite edge portions of the opening portion 2 in a vehicle width direction. Each driving unit has a known configuration and includes a guide rail that extends in a vehicle front-rear direction and a drive shoe that is displaced in a front-rear direction along a guide rail when an actuator is driven. With the drive shoes displaced in the front-rear direction, the movable panel 11 performs tilting displacement in a vertical direction or performs sliding displacement in the front-rear direction.

The movable panel 11 of the sunroof apparatus 10 for a vehicle in this example performs rearward sliding displacement after tilting upwards from a closing position illustrated in Fig. 1A at which the opening portion 2 is closed so that the movable panel 11 is displaced up to an opening position illustrated in Fig. 1B at which the opening portion 2 is open. In addition, the movable panel 11 tilts downwards after performing frontward sliding displacement from the opening position illustrated in Fig. 1B so that the movable panel 11 is displaced up to the closing position illustrated in Fig. 1A.

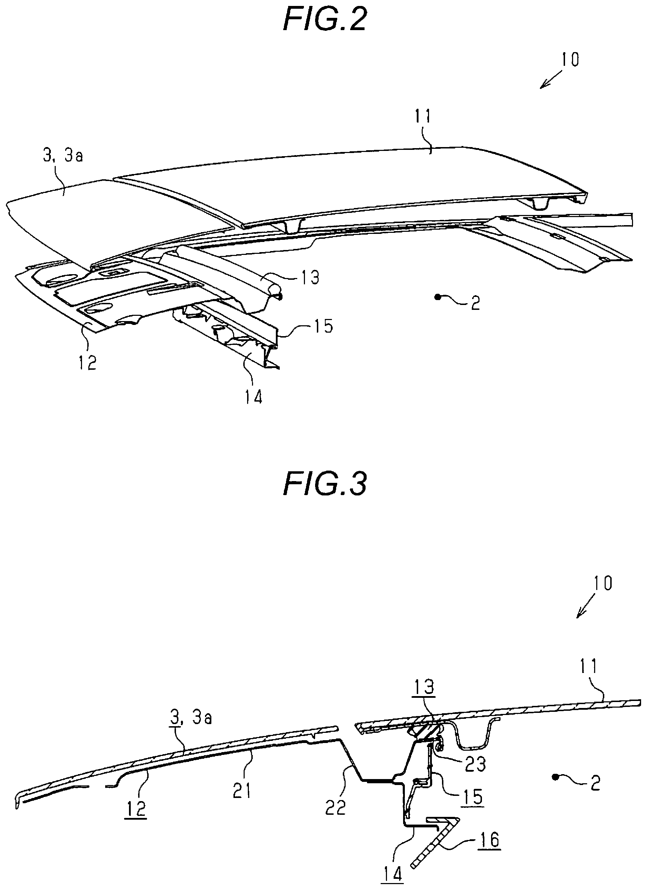

As illustrated in Fig. 2, the sunroof apparatus 10 for a vehicle includes a base panel 12, a weather strip 13, a bracket 14, and a cover 15, in addition to the movable panel 11.

As illustrated in each of Figs. 2 to 5, the base panel 12 is a metal frame member that supports a front side panel 3a constituting a portion of the roof 3 that is closer to the front side than the opening portion 2 and the base panel 12 includes a plate-shaped frame portion 21 that supports the front side panel 3a, a recess portion 22 that continuously extends from a rear edge portion of the frame portion 21 and is recessed downwards, and a plate-shaped portion 23 that continuously extends from a rear edge portion of the recess portion 22. A wind deflector, for example, is disposed on an upper surface of the recess portion 22. In addition, a rear edge portion of the plate-shaped portion 23 is an opening edge portion 24 that faces the opening portion 2 and is curved downwards.

Only the frame portion 21 of the base panel 12 faces the front side panel 3a in the vertical direction and the recess portion 22 and the plate-shaped portion 23 face the movable panel 11 in the vertical direction when the movable panel 11 is in the closing position.

The weather strip 13 is a rubber member that extends in the vehicle width direction and is attached to the plate-shaped portion 23. The weather strip 13 includes an attachment leg portion 31 that covers the opening edge portion 24 of the plate-shaped portion 23 such that the attachment leg portion 31 wraps in the opening edge portion 24 from the internal side of the opening portion 2.

The bracket 14 is a metal frame member for supporting the cover 15 and attaching a roof headliner 16 that constitutes a portion of the interior (a liner) of the vehicle 1. The bracket 14 extends in the vehicle width direction as a whole.

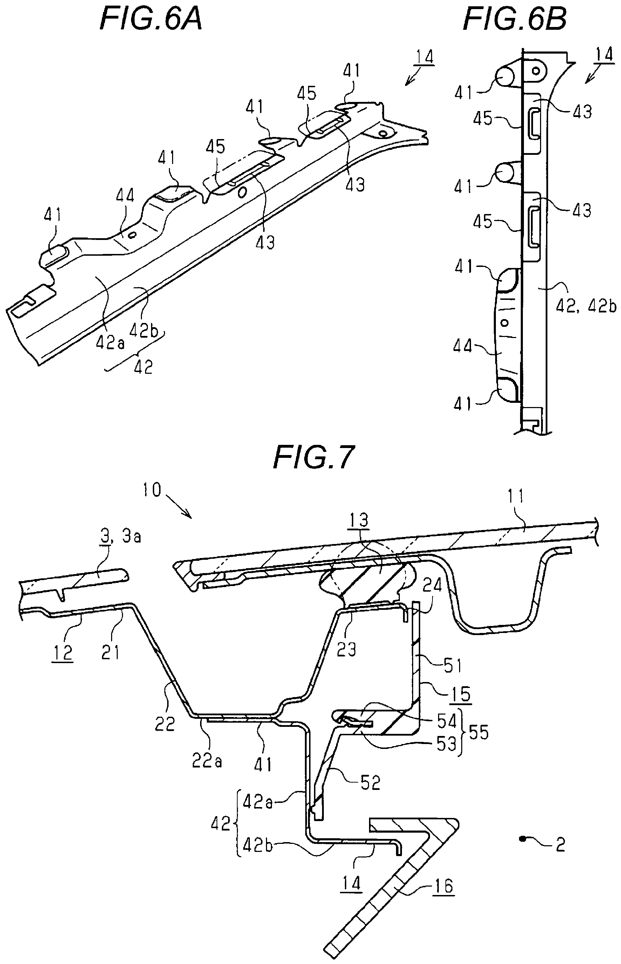

As illustrated in Figs. 6A and 6B, the bracket 14 includes welded portions 41 that are welded to the base panel 12, a supporting plate portion 42 that is an L-shaped plate portion extending in the vehicle width direction and supports each welded portion 41 and the roof headliner 16, and plate-shaped interposed portions 43 that are supported by the supporting plate portion 42 and to which the cover 15 is attached.

The welded portions 41 are plate-shaped portions that are provided at predetermined intervals in the vehicle width direction. A rear edge portion of each of the plurality of welded portions 41 continuously extends from an upper edge portion of the supporting plate portion 42. A portion of the plurality of welded portions 41 is connected to each other via a continuous portion 44 that extends in the vehicle width direction. An indoor lamp or the like is attached to the continuous portion 44. The welded portions 41 correspond to a fixation portion.

The supporting plate portion 42 includes a plate-shaped longitudinal wall portion 42a that extends in the vehicle width direction and the vertical direction and a plate-shaped transverse wall portion 42b that extends in the vehicle width direction and the front-rear direction. An upper edge portion of the longitudinal wall portion 42a of the supporting plate portion 42 continuously extends from the welded portions 41. In addition, the upper edge portion of the longitudinal wall portion 42a of the supporting plate portion 42 continuously extends from the interposed portions 43 also.

A rear edge portion of the transverse wall portion 42b which constitutes the supporting plate portion 42 is curved downward. An upper end portion of the roof headliner 16 is attached to the rear edge portion of the transverse wall portion 42b such that the upper end portion wraps in the rear edge portion. The longitudinal wall portion 42a corresponds to a connection portion and the transverse wall portion 42b corresponds to an interior holding portion.

The plurality of interposed portions 43 are provided such that each of the plurality of interposed portions 43 is provided between the welded portions 41 in the vehicle width direction. A front edge portion of each interposed portion 43 continuously extends from the upper edge portion of the supporting plate portion 42. The interposed portions 43 correspond to a cover holding portion.

The bracket 14 is manufactured through, for example, press forming. Therefore, as illustrated by two-dot lines in Fig. 6A, at a time immediately after the press forming, a rear edge portion of each interposed portion 43 continuously extends from the upper edge portion of the longitudinal wall portion 42a of the supporting plate portion 42 as with the welded portions 41. Each interposed portion 43 is bent with a boundary portion 45 between each interposed portion 43 and the longitudinal wall portion 42a as a base point such that a front edge portion of each supporting plate portion 42 continuously extends from the upper edge portion of the longitudinal wall portion 42a that constitutes the supporting plate portion 42.

As illustrated in Fig. 7, the cover 15 is a resin member and includes a first longitudinal surface portion 51 and a second longitudinal surface portion 52 each of which includes a plate surface extending in the vehicle width direction and the vertical direction, a connecting portion 53 that connects the first longitudinal surface portion 51 and the second longitudinal surface portion 52, and a protruding plate portion 54 that protrudes from a front surface of the first longitudinal surface portion 51.

The first longitudinal surface portion 51 is a plate-shaped member that extends in the vehicle width direction and the vertical direction and a lower edge portion thereof continuously extends from a rear edge portion of the plate-shaped connecting portion 53 that extends in the vehicle width direction and the front-rear direction. A vertical dimension of the first longitudinal surface portion 51 is set to be smaller than a vertical dimension of an area between a lowermost portion 22a of the recess portion 22 that constitutes the base panel 12 and the plate-shaped portion 23.

The second longitudinal surface portion 52 is a plate-shaped member that extends in the vehicle width direction and the vertical direction and an upper edge portion thereof continuously extends from a front edge portion of the connecting portion 53 that is a plate-shaped member extending in the vehicle width direction and the front-rear direction. Therefore, the first longitudinal surface portion 51 and the second longitudinal surface portion 52 are offset from each other in the front-rear direction by a distance equal to a front-rear dimension of the connecting portion 53. The front-rear dimension of the connecting portion 53 is set to be smaller than a front-rear dimension of each interposed portion 43 that constitutes the bracket 14. The first longitudinal surface portion 51 corresponds to a first cover portion and the second longitudinal surface portion 52 corresponds to a second cover portion.

The protruding plate portion 54 is a plate-shaped member that extends in the vehicle width direction and the front-rear direction and protrudes from the front surface of the first longitudinal surface portion 51 at a position above the connecting portion 53. A protrusion dimension (a front-rear dimension) of the protruding plate portion 54 is set to be equal to the front-rear dimension of the connecting portion 53. In addition, a distance between the protruding plate portion 54 and the connecting portion 53 (a vertical dimension) is set to be slightly smaller than a plate thickness (a vertical dimension) of each interposed portion 43 that constitutes the bracket 14. The connecting portion 53 and the protruding plate portion 54 constitute an interposing portion 55.

Next, an operation and an effect of the sunroof apparatus 10 for a vehicle will be described.

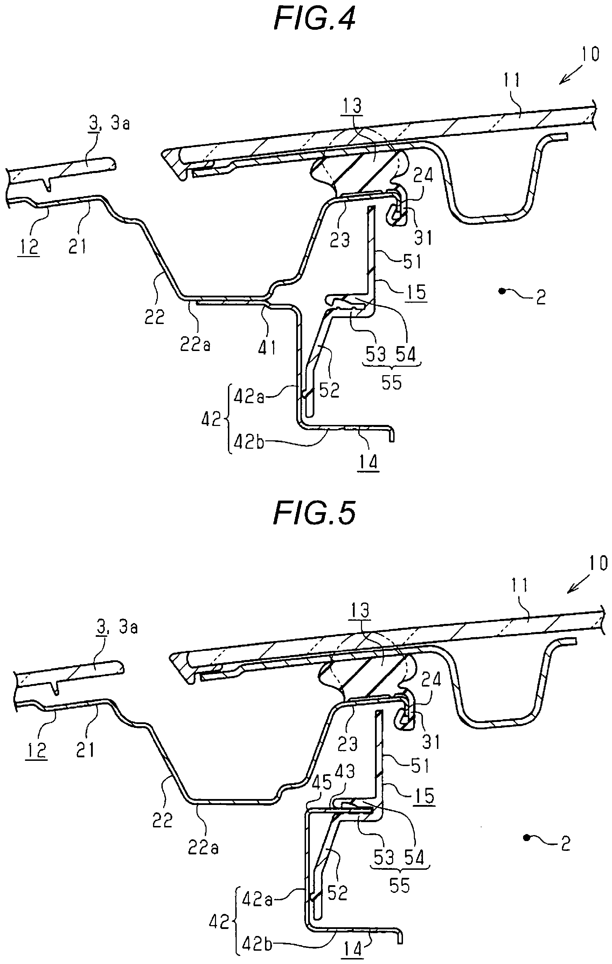

As illustrated in Fig. 5, the cover 15 is attached to the interposed portions 43 each of which protrudes toward a position inside the opening portion 2 (here, toward a rear portion of the vehicle) from an area between the plate-shaped portion 23 of the base panel 12 that faces the cover 15 in the vertical direction and the transverse wall portion 42b of the supporting plate portion 42 that supports the roof headliner 16.

In addition, the cover 15 includes the first longitudinal surface portion 51 that extends upwards from the interposing portion 55 in which the interposed portion 43 is interposed, that is, toward the base panel 12 and the second longitudinal surface portion 52 that extends downwards from the interposing portion 55, that is, toward the transverse wall portion 42b.

Therefore, a portion of the base panel 12 and a portion of the bracket 14 that face the opening portion are covered by the cover 15. Accordingly, it is difficult to see the base panel 12 that serves as a frame of an upper portion of the vehicle and the bracket 14 for attaching the roof headliner 16 when seeing the front side from a position inside the opening portion 2. Therefore, the appearance of the sunroof apparatus 10 for a vehicle is unlikely to be deteriorated.

In addition, it is difficult to see the base panel 12 and the welded portion 41 that constitutes the bracket 14 from a position inside the opening portion 2 because of the first longitudinal surface portion 51 and it is difficult to see the longitudinal wall portion 42a that constitutes the bracket 14 from a position inside the opening portion 2 because of the second longitudinal surface portion 52. Therefore, the appearance of the sunroof apparatus 10 for a vehicle is more unlikely to be deteriorated.

Furthermore, the weather strip 13 includes the attachment leg portion 31 that covers the opening edge portion 24 of the plate-shaped portion 23 such that the attachment leg portion 31 wraps in the opening edge portion 24 from a position inside the opening portion 2.

It is difficult to see the opening edge portion 24 of the base panel 12 from a position inside the opening portion 2 because of the attachment leg portion 31. That is, since the weather strip 13 is interposed between the movable panel 11 and the base panel 12, there is an effect that liquid tightness between the movable panel 11 and the base panel 12 is secured and it is difficult to see the base panel from a position inside the opening portion 2. Therefore, it is not necessary for the cover 15 to cover the entire portion of the base panel 12 on the opening portion 2 side from a position inside the opening portion 2. That is, the cover 15 only has to cover the entire portion of the base panel 12 on the opening portion 2 side from a position inside the opening portion 2 in cooperation with the weather strip 13. Therefore, it is easy to set the shape of the cover 15 such that the appearance of the sunroof apparatus 10 for a vehicle is improved.

The bracket 14 in this example is manufactured through a simple process in which a metal material is processed through press forming which is a so-called general technology and each interposed portion 43 is bent with the boundary portion 45 between each interposed portion 43 and the longitudinal wall portion 42a as a base point. That is, the sunroof apparatus 10 for a vehicle can be easily manufactured.

The above-described embodiment may be modified as follows.
- In the above-described embodiment, the plate-shaped portion 23 is positioned above the first longitudinal surface portion 51 of the cover 15. However, as illustrated in Fig. 7, the first longitudinal surface portion 51 of the cover 15 may be provided to be positioned closer to a position inside the opening portion 2 than the plate-shaped portion 23 (the opening edge portion 24).
   According to this configuration, it is possible to cover the entire portion of the base panel 12 and the bracket 14 on the opening portion 2 side by using only the cover 15. Therefore, it is easy to set the shapes of the base panel 12 and the bracket 14 such that the appearance of the sunroof apparatus 10 for a vehicle is improved.
   • In the above-described embodiment, a method for manufacturing the bracket 14 is not limited to the press forming. In addition, a bending process in which the boundary portion 45 is used as a base point may not be necessary.
   • In the above-described embodiment, the cover 15 is attached to the bracket 14 with the interposed portions 43 of the bracket 14 interposed between portions of the interposing portion 55. However, the cover 15 may be fixed to the bracket 14 through a method such as bonding instead of being interposed.
   • In the above-described embodiment, the base panel 12 and the bracket 14 are fixed through a welding process. However, the base panel 12 and the bracket 14 may be fixed to each other through a method such as fastening using fastening tools such as bolts and nuts instead of being welded.
   • In the above-described embodiment, the bracket 14 and the cover 15 are attached to a front edge portion of the opening portion 2. However, the bracket 14 and the cover 15 may be attached to a rear edge portion of the opening portion 2. In this case, the appearance of the rear edge portion of the opening portion 2 is unlikely to be deteriorated.
   • In the above-described embodiment, the recess portion 22 is set to dispose a wind deflector (not shown). However, in a case where the wind deflector is not disposed, the recess portion 22 may be omitted and the frame portion 21 and the plate-shaped portion 23 may be continuously formed.

Next, a technical idea that can be derived from the embodiment described above and the other example described above will be described.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the scope of the present invention. Accordingly, it is expressly intended that all such variations, changes and equivalents which fall within the scope of the present invention as defined in the claims, be embraced thereby.

## Claims

1. A sunroof apparatus (10) for a vehicle comprising:
a base panel (12) that serves as a frame of an upper portion of a vehicle (1) and supports a roof (3) including an opening portion (2);
a bracket (14) that is fixed to the base panel and includes an interior holding portion (42b) to which a vehicle interior component (16) is attached and a cover holding portion (43) which protrudes toward a position inside the opening portion from a position between the base panel and the interior holding portion; and
a cover (15) that is attached to the cover holding portion.

2. The sunroof apparatus for a vehicle according to claim 1,
wherein the bracket includes a fixation portion (41) that is fixed to a lower surface of the base panel and a connection portion (42a) that extends downwards from the fixation portion,
the interior holding portion is provided to extend toward the opening portion from the connection portion,
the cover holding portion is provided to extend toward the opening portion from the connection portion at a position above the interior holding portion, and
the cover includes a first cover portion (51) that extends upwards from the cover holding portion and a second cover portion (52) that extends downwards from the cover holding portion.

3. The sunroof apparatus for a vehicle according to claim 2, further comprising:
a movable panel (11) that is displaced in a vertical direction so that the opening portion is opened or closed; and
a weather strip (13) that is interposed between the movable panel and the base panel in the vertical direction so that liquid tightness between the movable panel and the base panel is secured,
wherein the weather strip includes an attachment leg portion (31) that is attached to the base panel such that the attachment leg portion wraps in an opening edge portion (24) of the base panel that faces the opening portion.

4. The sunroof apparatus for a vehicle according to claim 2 or 3,
wherein the cover is provided to be positioned closer to a position inside the opening portion than the opening edge portion of the base panel that faces the opening portion.

5. The sunroof apparatus for a vehicle according to any one of claims 2 to 4,
wherein both of the fixation portion and the cover holding portion are plate-shaped,and
the cover holding portion is provided on an end portion of the connection portion such that the cover holding portion is positioned between a plurality of the fixation portions and the cover holding portion is bent toward a side opposite to the fixation portion side with a boundary portion (45) between the cover holding portion and the connection portion as a base point.
